# EUROPÄISCHE PATENTANMELDUNG

(11) **EP 1 947 535 A1**
(43) Veröffentlichungstag der Anmeldung: **23.07.2008**
(21) Anmeldenummer: 07000978.2
(22) Anmeldetag: 17.01.2007
(51) Int. Cl.: G05B 19/042, G05B 19/05

(54) **Überwachung der Programmierung eines Automatisierungsgerätes**

(71) Anmelder: SIEMENS AKTIENGESELLSCHAFT, 80333 München (DE)
(72) Erfinder: Fusslein, Wolfgang, 76879 Essingen (DE); Kohl, Frederic, 67630 Neewiller (FR)

(57) **Zusammenfassung**

Es wird ein Verfahren zum Betrieb eines Automatisierungssystems (10), das mindestens ein Automatisierungsgerät (14, 16, 18, 20) und zumindest zeitweise ein Programmiergerät (26) umfasst, angegeben. Mittels des Programmiergerätes (26) wird als Automatisierungslösung zur Steuerung und/oder Überwachung eines technischen Prozesses (22) ein Steuerungsprogramm (24) erstellt und an das mindestens eine Automatisierungsgerät (14) übertragen. Bei der Übertragung übermittelte Daten (28) werden von einem Protokollierungswerkzeug (30) erfasst und gespeichert, indem das Protokollierungswerkzeug (30) zwischen Programmiergerät (26) und Automatisierungsgerät (14, 16, 18, 20) ausgetauschte Telegramme (32) zum Erfassen der Daten (28) überwacht und in den Telegrammen (32) enthaltene Nutzdaten (34) je nach Art des jeweiligen Telegramms (32) übernimmt. Das Protokollierungswerkzeug (30) erzeugt dabei als Mitschrift (36) der Übertragung eine Kombination der übertragenen Daten (28) in genau der Art und Weise, wie diese aufgrund der Telegramme (32) beim Automatisierungsgerät (14, 16, 18, 20) kombiniert werden oder kombinierbar sind. Die Mitschrift (36) steht schließlich für weitere Auswertungen zur Verfügung.

## Beschreibung

Die Erfindung betrifft ein Verfahren zum Betrieb eines Automatisierungssystems, wobei das Automatisierungssystem mindestens ein Automatisierungsgerät und ein zumindest zeitweise mit dem Automatisierungssystem kommunikativ verbundenes Programmiergerät umfasst. Mittels des Programmiergerätes wird als so genannte Automatisierungslösung zur Steuerung und/oder Überwachung eines technischen Prozesses ein Steuerungsprogramm erstellt und an das mindestens eine Automatisierungsgerät übertragen.

Derartige Verfahren sind allgemein bekannt. Die Anmelderin entwickelt und vertreibt unter der Marke "SIMATIC" Programmier- und Automatisierungsgeräte, die sich zu Automatisierungssystemen mit nahezu unbegrenzter Komplexität kombinieren lassen. Für solche Automatisierungssysteme werden mit Hilfe der jeweils unterstützten Programmiersprachen als individuelle Automatisierungslösungen Steuerungsprogramme erstellt, unter deren Kontrolle die Steuerung und/oder Überwachung technischer Prozesse, z. B. die Steuerung eines Kraftwerks, erfolgt.

Bei bestimmten Steuerungsprogrammen oder Teilen solcher Steuerungsprogramme, hier und im Folgenden unter dem Begriff "Steuerungsprogramm" zusammengefasst, können z. B. Zertifizierungen oder sonstige Überprüfungen, mit denen nach Überprüfen der jeweiligen Funktionalität festgestellt wird, dass sich das Steuerungsprogramm in jeder denkbaren Situation in einer erwarteten Art und Weise verhält, vorgesehen sein. Solche Zertifizierungen oder Ähnliches, hier und im Folgenden unter dem Oberbegriff "Zertifizierung" zusammengefasst, sind z. B. wichtig, wenn es sich um Steuerungen und/oder Überwachungen von potentiell gefährlichen Anlagen oder Prozessen handelt. So muss z. B. bei der Steuerung eines Chargenprozesses, bei dem durch Kombination bestimmter Ausgangsstoffe giftige, explosive oder in sonstiger Art und Weise gefährliche Stoffe entstehen können, zu jedem Zeitpunkt sichergestellt sein, dass solche Stoffe nicht entstehen oder deren Entstehung beherrschbar ist oder deren Entstehen in einem unvermeidbaren oder beabsichtigten Umfang bleibt. Ein Ausfall eines Steuerungsprogramms in einer solchen Situation könnte z. B. dazu führen, dass die Kombination zweier grundsätzlich gefährlicher Stoffe unkontrolliert fortgesetzt wird, da mit dem Ausfall des Steuerungsprogramms keine Überwachung des Dosiervorgangs mehr stattfindet und insoweit eine Materialzufuhr auch nicht unterbrochen wird.

In einem solchen Umfeld ist es üblich, dass die Steuerungsprogramme vor einer Freigabe zur Steuerung und/oder Überwachung des jeweiligen technischen Prozesses intensiv untersucht werden. Bei einer solchen Untersuchung wird z. B. sichergestellt, dass Situationen der oben beschriebenen Art nicht auftreten können oder dass solche Situationen auch im Falle eines eventuellen Auftretens jederzeit beherrschbar bleiben. Die Zertifizierung von Steuerungsprogrammen ist eine aufwendige Maßnahme, die von dazu bestellten Institutionen durchgeführt wird. Bei einzelnen Steuerungsprogrammen geht man in gewissem Umfang auch von einer "Selbstzertifizierung" aus, die verkürzt so beschrieben wird, dass, wenn ein Steuerungsprogramm einen technischen Prozess über einen bestimmten Zeitraum fehlerfrei steuert oder zumindest so steuert, dass keine Ausnahmesituationen entstehen oder entstandene Ausnahmesituationen beherrscht wurden, das Steuerungsprogramm einen zumindest zertifizierungswürdigen Zustand erreicht hat.

Im Zusammenhang mit solchen Steuerungsprogrammen stellt sich die Frage, wie vorzugehen ist, wenn für das Automatisierungssystem neue Software, z. B. neue Programmiersprachen, neue Entwicklungsumgebungen, neue Bibliotheken, etc., verfügbar wird. Hier verbietet es sich, zum Erhalt eines neuen Steuerungsprogramms einfach die Quellen heranzuziehen, aufgrund derer ein bereits in Betrieb befindliches Steuerungsprogramm erstellt wurde, eine neue Übertragung der Quellen in ein durch das Automatisierungssystem verarbeitetes Format vorzusehen und dieses dann direkt im Automatisierungssystem zur Ausführung zu bringen. Ein auf diese Weise erstelltes neues Steuerungsprogramm würde sich nämlich von dem bisher durch. das Automatisierungssystem ausgeführten Steuerungsprogramm ggf. unterscheiden, so dass für dieses neue Steuerungsprogramm Feststellungen nach Art einer Zertifizierung oder dergleichen, die ggf. in Bezug auf die bisher durch das Automatisierungssystem ausgeführte Software hinsichtlich ihrer Tauglichkeit zur Steuerung und/oder Überwachung des jeweiligen technischen Prozesses getroffen wurden, nicht mehr gelten. Auf der anderen Seite ist auch eine erneute Zertifizierung von Steuerungsprogrammen, die auf grundsätzlich unveränderten Quellen beruhen und sich von bisher in Betrieb befindlichen Steuerungsprogrammen im Wesentlichen dadurch unterscheiden, dass bei deren Erstellung eine aktualisierte Entwicklungsumgebung der o.g. Art zum Einsatz kommt, vor allem wegen des damit verbundenen Aufwands und des mit einem solchen Aufwand einhergehenden Zeitverlustes nur bedingt praktikabel.

Eine Aufgabe der Erfindung besteht entsprechend darin, in diesem Zusammenhang eine Lösung zu finden, die es erlaubt, Aussagen darüber zu machen, ob und in welchem Umfang sich ein Steuerungsprogramm, das mit einer neuen Entwicklungsumgebung oder auf Basis von Daten aus einer neuen Entwicklungsumgebung erstellt wurde, von einem bisher in Betrieb befindlichen Steuerungsprogramm unterscheidet.

Diese Aufgabe wird erfindungsgemäß mit den Merkmalen des Anspruchs 1 gelöst. Dazu ist bei einem Verfahren der eingangs genannten Art vorgesehen, dass bei der Übertragung übermittelte Daten von einem Protokollierungswerkzeug erfasst und gespeichert werden, wobei das Protokollierungswerkzeug zwischen Programmiergerät und Automatisierungsgerät ausgetauschte Telegramme zum Erfassen der Daten überwacht und darin enthaltene Nutzdaten je nach Art des jeweiligen Telegramms übernimmt und als Mitschrift der Übertragung eine Kombination der übertragenen Daten, so wie sie aufgrund der Telegramme beim Automatisierungsgerät kombiniert werden oder kombinierbar sind, zur weiteren Auswertung bereitstellt.

Der Vorteil der Erfindung besteht darin, dass durch die Mitschrift der Übertragung ein besonders leichter Zugriff auf die für das jeweilige Automatisierungsgerät bestimmten Daten möglich ist. Aufgrund der Kombination der übertragenen Daten in der Mitschrift in genau der Art, wie sie aufgrund der Telegramme beim Automatisierungsgerät kombiniert werden oder kombinierbar sind, liegen diese in einer identifizierbaren Struktur vor. Wenn z. B. im Rahmen der Übertragung von Daten vom Programmiergerät zum Automatisierungsgerät ein Teil eines Steuerungsprogramms, z. B. ein so genannter Funktionsbaustein, ersetzt wird, liegt als Ergebnis der Mitschrift der Funktionsbaustein genau so vor, wie er auf Seiten des Automatisierungsgerätes in das dortige Steuerungsprogramm implementiert wird. Anders als bei einem ggf. ebenfalls zur Lösung von Teilaspekten der o.g. Aufgabe möglichen Auszug aus dem Speicher des jeweiligen Automatisierungsgerätes, bei dem solche Strukturen und Zusammenhänge verloren gehen und lediglich der tatsächliche Speicherinhalt, also die durch das Automatisierungsgerät direkt verarbeitbaren, insbesondere ausführbaren Daten verfügbar sind, ist mit der Mitschrift durch das Protokollierungswerkzeug eine Repräsentation der übertragenen Daten erreicht, die einen Vergleich oder sonstige spätere Auswertung noch handhabbar macht.

Insoweit ist z. B. auch vorteilhaft vorgesehen, dass die Mitschrift mit dem Steuerungsprogramm oder einem anderen Steuerungsprogramm, also entsprechend dem oben skizzierten Szenario, z. B. einem Steuerungsprogramm, das sich bereits zum Betrieb des jeweiligen technischen Prozesses im Einsatz befunden hat, verglichen wird. Wenn bei einem solchen Vergleich keine Unterschiede zutage treten, ist gewährleistet, dass sich das neue Steuerungsprogramm nicht anders verhält als das bisher bereits in Betrieb befindliche Steuerungsprogramm, so dass Zertifizierungen oder Testate erhalten bleiben und entsprechend der technische Prozess mit dem aktualisierten Steuerungsprogramm weiter betrieben werden kann.

Weiter bevorzugt kann vorgesehen sein, dass der Vergleich mittels des Protokollierungswerkzeugs selbst durchgeführt wird. Dazu kann das Protokollierungswerkzeug entweder unterschiedliche Versionen übertragener Daten speichern oder erhält in sonst geeigneter, grundsätzlich an sich bekannter Art und Weise Zugriff auf beim Vergleich heranzuziehende Daten, etwa indem ein dem Vergleich zugrunde liegendes weiteres Steuerungsprogramm extern zugespielt wird.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn das Überwachen der ausgetauschten Telegramme durch das Protokollierungswerkzeug durch Überwachen des Datentransfers auf Ebene einer der durch das OSI-Schichtenmodell definierten Schichten erfolgt, ist gewährleistet, dass das Protokollierungswerkzeug die Kombination der übertragenen Daten in gleicher Art und Weise vornehmen kann, wie sie auf Seiten des Automatisierungsgerätes als eigentlichen Empfänger der übertragenen Daten kombiniert werden oder kombinierbar sind. Das Protokollierungswerkzeug verhält sich also hinsichtlich des Erfassens der übermittelten Daten wie der eigentliche Empfänger, so dass sich die Auswertbarkeit der Mitschrift in der oben beschriebenen Art und Weise ergibt.

Weiter bevorzugt kann vorgesehen sein, dass die Mitschrift nach der ursprünglichen Übertragung erneut an das jeweilige Automatisierungsgerät oder ein anderes Automatisierungsgerät übertragen wird. Auf diese Weise ist es nämlich möglich, im Automatisierungsgerät reproduzierbare Zustände zu erzeugen, etwa indem das Automatisierungsgerät in einen Zustand zurückversetzt wird, der bestanden hat, nachdem ein neues oder geändertes Steuerungsprogramm an dieses übertragen wurde (Ursprungszustand). Mit diesem Aspekt des Verfahrens ist es ebenfalls möglich, mehrere Automatisierungsgeräte in identische Zustände zu versetzen, wenn dazu jeweils die gleiche Mitschrift verwendet wird.

Das Verfahren, insbesondere die Funktionalität des Protokollierungswerkzeugs, ist bevorzugt in Software, ggf. kombiniert in Soft- und Firmware, hier und im Folgenden zusammenfassend als Software bezeichnet, implementiert, so dass von der Erfindung auch ein Computerprogramm mit durch einen Computer ausführbaren Programmcodeanweisungen zur Implementierung des eingangs oder nachfolgend beschriebenen Verfahrens, insbesondere zur Implementierung der Funktionalität des Protokollierungswerkzeugs, und ein Computerprogrammprodukt, insbesondere ein Speichermedium, wie z. B. eine Diskette, ein Speicherbaustein oder dergleichen, mit einem derartigen Computerprogramm erfasst ist.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

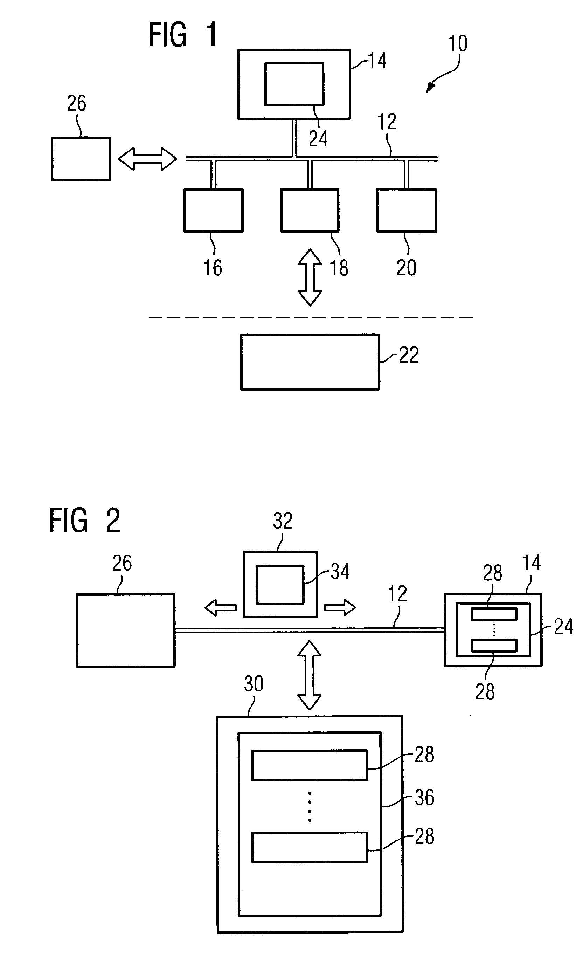

Darin zeigen
- FIG 1: ein Automatisierungssystem zur Steuerung und/oder Überwachung des technischen Prozesses entsprechend einer für das Automatisierungssystem und den technischen Prozess definierten Automatisierungslösung und
- FIG 2: eine Übertragung eines Steuerungsprogramms von einem ersten zu einem zweiten von dem Automatisierungssystem umfassten Gerät, wobei bei der Übertragung übermittelte Daten von einem Protokollierungswerkzeug erfasst und gespeichert werden, wobei das Protokollierungswerkzeug anhand der erfassten Daten eine Mitschrift des Übertragungsvorgangs erstellt, die bei weiteren Auswertungen zugrunde gelegt werden kann.

FIG 1 zeigt in schematisch vereinfachter Form ein insgesamt mit 10 bezeichnetes Automatisierungssystem, das in der dargestellten Form eine Anzahl von kommunikativ über z. B. einen Bus 12 verbundenen Automatisierungsgeräten 14, 16, 18, 20 umfasst, die zusammen einen ebenfalls nur schematisch dargestellten technischen Prozess 22, z. B. einen Produktionsprozess, wie z. B. die Herstellung eines Automobils oder von Automobilteilen oder die Herstellung von z. B. Arzneimitteln und dergleichen, überwachen und/oder steuern. Zur Steuerung und/oder Überwachung des technischen Prozesses 22 ist dem Automatisierungssystem 10 oder einzelnen Automatisierungsgeräten 14 als Automatisierungslösung ein Steuerungsprogramm 24 zugeordnet, unter dessen Kontrolle bei Ausführung durch dafür vorgesehene Verarbeitungseinheiten innerhalb des Automatisierungssystems 10 dieses im Zusammenwirken mit nicht dargestellten Sensoren und Aktoren die Steuerung und/oder Überwachung des technischen Prozesses 22 übernimmt.

Der Begriff "Automatisierungsgerät" umfasst dabei sämtliche Geräte, Einrichtungen oder Systeme, also neben z. B. Steuerungen, wie speicherprogrammierbaren Steuerungen, Prozessrechnern, (Industrie-) Computern und dergleichen auch Antriebssteuerungen, Frequenzumrichter und Ähnliches, wie sie zur Steuerung, Regelung und/oder Überwachung technologischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Dem Automatisierungssystem 10 ist zumindest zeitweise ein Programmiergerät 26 zugeordnet, mit dem das Steuerungsprogramm 24 erstellt, gewartet oder modifiziert werden kann. Ein neues oder modifiziertes Steuerungsprogramm 24 wird aufgrund der kommunikativen Verbindung zwischen Programmiergerät 26 und Automatisierungssystem 10, insbesondere aufgrund des Anschlusses des Programmiergerätes 26 an den Bus 12, an eines der Automatisierungsgeräte 14, 16, 18, 20 übertragen und kann dort zur Ausführung gelangen.

FIG 2 zeigt in einer anderen Darstellung einen Ausschnitt aus der Darstellung gemäß FIG 1, und zwar eine Datenübertragung vom Programmiergerät 26 zu einem der Automatisierungsgeräte 14, 16, 18, 20, hier dem Automatisierungsgerät 14, zur Übertragung einer neuen oder geänderten Fassung des Steuerungsprogramms 24 an dieses. Für die weitere Beschreibung wird davon ausgegangen, dass die kommunikative Verbindung zwischen Programmiergerät 26 an Automatisierungsgerät 14 über den Bus 12 besteht. Alternativ kann auch vorgesehen sein, dass die kommunikative Verbindung auf anderem Wege, z. B. auf leitungslosem Wege, hergestellt ist.

Bei der Übertragung zwischen Programmiergerät 26 und Automatisierungsgerät 14 übermittelte Daten 28 werden von einem Protokollierungswerkzeug 30 erfasst und gespeichert. Das Protokollierungswerkzeug 30 hat dazu in geeigneter Art und Weise Zugriff auf die Datenübertragung zwischen Programmiergerät 26 und Automatisierungsgerät 14, etwa indem es in Hardware an den Bus 12 angeschlossen ist oder indem es bei einer Implementation in Software in die Funktionen integriert oder mit solchen Funktionen in geeigneter Form kombiniert ist, die beim Übertragen der Daten 28 verwendet werden. Beide Alternativen sollen in der Darstellung in FIG 2 durch den Doppelpfeil veranschaulicht sein.

Zum Erfassen und Speichern der Daten 28 überwacht das Protokollierungswerkzeug 30 zwischen Programmiergerät 26 und Automatisierungsgerät 14 ausgetauschte Telegramme 32. Solche Telegramme 32 werden in an sich bekannter Art und Weise zwischen den an einer Kommunikation jeweils beteiligten Teilnehmern, hier also dem Programmiergerät 26 und dem Automatisierungsgerät 14, ausgetauscht. Jedes Telegramm 32 umfasst dabei Nutzdaten 34, die bei der Übertragung vom Programmiergerät 26 an das Automatisierungsgerät 14 vom Protokollierungswerkzeug 30 erfasst und als Daten 28 gespeichert werden.

Auch wenn in der bildlichen Darstellung in FIG 2 nur ein Telegramm 32 dargestellt ist, versteht es sich von selbst, dass zur Übertragung eines Steuerungsprogramms 24 eine Vielzahl von Telegrammen 32 Verwendung finden kann, wobei die von dem Steuerungsprogramm 24 umfassten Daten 28 auf eine Mehrzahl von Telegrammen 32 aufgeteilt ist. Ebenfalls kann über das jeweils verwendete Kommunikationsmedium, hier also z. B. den Bus 12, während der Übertragung des Steuerungsprogramms 24 an das Automatisierungsgerät 14 mittels einer Folge dazu benötigter Telegramme 32 das Versenden weiterer Telegramme geschehen, die zu Kommunikationsbeziehungen zwischen anderen Kommunikationsteilnehmern oder einer anderen Kommunikationsbeziehung als der Übermittlung des Steuerungsprogramms 24 zwischen den beschriebenen Kommunikationsteilnehmern, also Programmiergerät 26 und Automatisierungsgerät 14, gehören. Das Protokollierungswerkzeug 30 wertet in dieser Hinsicht den Datenstrom, also die Folge von Telegrammen 32, am Kommunikationsmedium aus und übernimmt nur diejenigen Daten 28, die zur Übertragung des Steuerungsprogramms 24 gehören. Im Datenstrom ist grundsätzlich nicht gewährleistet, dass die Reihenfolge der Telegramme 32, mit denen das Steuerungsprogramm 24 übertragen wird, der tatsächlichen Reihenfolge der Daten 28, die das Steuerungsprogramm 24 bilden, entspricht. Insoweit nimmt das Protokollierungswerkzeug 30 auch quasi eine Sortierung der Daten 28 vor, so dass die bei der Übertragung erfassten Daten 28 in die ursprünglich vorgesehene Reihenfolge gebracht werden können. All dies ist von der Formulierung, wonach das Protokollierungswerkzeug 30 eine "Kombination der übertragenen Daten 28, so wie sie aufgrund der Telegramme 32 beim Automatisierungsgerät 14 kombiniert werden oder kombinierbar sind, vornimmt", umfasst. Die Summe der bei einer Übertragung erfassten Daten 28 wird im Folgenden als Mitschrift 36 bezeichnet und kann je nach Umfang des Steuerungsprogramms 24 eine entsprechende Vielzahl von Daten 28 umfassen.

Die Mitschrift 36 steht nach Abschluss der Übertragung des Steuerungsprogramms 24 an das Automatisierungsgerät 14 für Vergleichszwecke zur Verfügung und repräsentiert eine bitidentische Kopie des Steuerungsprogramms 24. Auf dieser Basis kann, wenn auf dem Programmiergerät 26 eine erste Entwicklungsumgebung 38 zum Erstellen des Steuerungsprogramms 24 installiert ist, ein mit dieser Entwicklungsumgebung 38 erstelltes Steuerungsprogramm 24 (bisheriges Steuerungsprogramm) als Mitschrift 36 (erste Mitschrift) für Vergleichszwecke vorgehalten werden.

Wenn die Entwicklungsumgebung 38, z. B. im Zuge von Revisionsänderungen der davon umfassten Softwareapplikationen, aktualisiert wird, kann ein neues Steuerungsprogramm 24 insbesondere auf Basis der auch dem bisherigen, ersten Steuerungsprogramm 24 zugrunde liegenden Quellen mit der neuen Entwicklungsumgebung 38 erstellt und zum Automatisierungsgerät 14 übertragen werden. Dabei ergibt sich eine weitere Mitschrift 36, die mit der ersten Mitschrift 36 verglichen werden kann. Ergibt sich dabei eine Identität, kann davon ausgegangen werden, dass sich das neue Steuerungsprogramm 24 auf dem Automatisierungsgerät 14 genauso verhält wie das dort bisher zur Ausführung gebrachte bisherige Steuerungsprogramm 24. Eventuelle Zertifizierungen oder sonstige Testate, die für das bisherige Steuerungsprogramm 24 erteilt wurden, können dabei als für das neue Steuerungsprogramm 24 erhalten geblieben angesehen werden.

Auf Basis der Mitschrift 36 ist es auch möglich, definierte Zustände in einem Automatisierungsgerät 14 herzustellen, z. B. indem die Mitschrift 36 auf das Automatisierungsgerät 14 geladen wird, so dass auf diesem wieder die Situation geschaffen wird, die unmittelbar nach dem Moment bestanden hat, indem vom Programmiergerät 26 das Steuerungsprogramm 24 an das Automatisierungsgerät 14 übertragen wurde. Auf diese Art und Weise kann zu Test- und Wartungszwecken immer wieder ein gleicher Zustand auf Seiten des Automatisierungsgerätes 14 reproduziert werden. Ebenfalls ist es auf Basis der Mitschrift 36 möglich, gleiche Zustände in mehreren Automatisierungsgeräten 14 herzustellen, indem die Mitschrift 36 nicht wie zuvor beschrieben nur an ein Automatisierungsgerät 14 übertragen wird, sondern an mehrere Automatisierungsgeräte 14 bis 20.

Damit lässt sich die Erfindung kurz wie folgt darstellen: Es wird ein Verfahren zum Betrieb eines Automatisierungssystems 10, das mindestens ein Automatisierungsgerät 14, 16, 18, 20 und zumindest zeitweise ein Programmiergerät 26 umfasst, angegeben. Mittels des Programmiergerätes 26 wird als Automatisierungslösung zur Steuerung und/oder Überwachung eines technischen Prozesses 22 ein Steuerungsprogramm 24 erstellt und an das mindestens eine Automatisierungsgerät 14 übertragen. Bei der Übertragung übermittelte Daten 28 werden von einem Protokollierungswerkzeug 30 erfasst und gespeichert, indem das Protokollierungswerkzeug 30 zwischen Programmiergerät 26 und Automatisierungsgerät 14, 16, 18, 20 ausgetauschte Telegramme 32 zum Erfassen der Daten 28 überwacht und in den Telegrammen 32 enthaltene Nutzdaten 34 je nach Art des jeweiligen Telegramms 32 übernimmt. Das Protokollierungswerkzeug 30 erzeugt dabei als Mitschrift 36 der Übertragung eine Kombination der übertragenen Daten 28 in genau der Art und Weise, wie diese aufgrund der Telegramme 32 beim Automatisierungsgerät 14, 16, 18, 20 kombiniert werden oder kombinierbar sind. Die Mitschrift 36 steht schließlich für weitere Auswertungen zur Verfügung.

## Patentansprüche

1. Verfahren zum Betrieb eines Automatisierungssystems (10) mit mindestens einem Automatisierungsgerät (14, 16, 18, 20) und einem von dem Automatisierungssystem (10) zumindest zeitweise umfassten Programmiergerät (26),
- wobei mittels des Programmiergerätes (26) als Automatisierungslösung zur Steuerung und/oder Überwachung eines technischen Prozesses (22) ein Steuerungsprogramm (24) erstellt und an das mindestens eine Automatisierungsgerät (14, 16, 18, 20) übertragen wird,
- wobei bei der Übertragung übermittelte Daten (28) von einem Protokollierungswerkzeug (30) während der Übertragung, also zur Laufzeit, erfasst und gespeichert werden,
- wobei das Protokollierungswerkzeug (30) zwischen Programmiergerät (26) und Automatisierungsgerät (14, 16, 18, 20) ausgetauschte Telegramme (32) zum Erfassen der Daten (28) überwacht und darin enthaltene Nutzdaten (34) je nach Art des jeweiligen Telegramms (32) übernimmt und
- wobei das Protokollierungswerkzeug (30) als Mitschrift (36) der Übertragung eine Kombination der übertragenen Daten (28), so wie diese aufgrund der Telegramme (32) beim Automatisierungsgerät (14, 16, 18, 20) kombiniert werden oder kombinierbar sind, zur weiteren Auswertung bereitstellt.

2. Verfahren nach Anspruch 1, wobei die Mitschrift (36) mit dem Steuerungsprogramm (24) oder einem anderen Steuerungsprogramm verglichen wird.

3. Verfahren nach Anspruch 2, wobei der Vergleich mittels des Protokollierungswerkzeugs (30) durchgeführt wird.

4. Verfahren nach Anspruch 2 oder 3, wobei das Ergebnis des Vergleichs für eine Freigabe des Steuerungsprogramms (24) zur Steuerung und/oder Überwachung des technischen Prozesses (22) herangezogen wird.

5. Verfahren nach einem der vorangehenden Ansprüche, wobei das Überwachen der ausgetauschten Telegramme (32) durch das Protokollierungswerkzeug (30) durch Überwachen des Datentransfers auf Ebene einer der durch das OSI-Schichtenmodell definierten Schicht erfolgt.

6. Verfahren nach einem der vorangehenden Ansprüche, wobei die Mitschrift (36) nach der ursprünglichen Übertragung erneut an das jeweilige Automatisierungsgerät (14, 16, 18, 20) oder ein anderes Automatisierungsgerät (14, 16, 18, 20) übertragen wird.

7. Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

8. Computerprogrammprodukt, insbesondere Speichermedium, mit einem durch einen Computer ausführbaren Computerprogramm gemäß Anspruch 7.

## Geänderte Patentansprüche

### Geänderte Patentansprüche gemäss Regel 137(2) EPÜ.

**1.** Verfahren zum Betrieb eines Automatisierungssystems (10) mit mindestens einem Automatisierungsgerät (14, 16, 18, 20) und einem von dem Automatisierungssystem (10) zumindest zeitweise umfassten Programmiergerät (26),
- wobei mittels des Programmiergerätes (26) als Automatisierungslösung zur Steuerung und/oder Überwachung eines technischen Prozesses (22) ein Steuerungsprogramm (24) erstellt und an das mindestens eine Automatisierungsgerät (14, 16, 18, 20) übertragen wird,
**dadurch gekennzeichnet,**
- **dass** bei der Übertragung übermittelte Daten (28) von einem Protokollierungswerkzeug (30) während der Übertragung, also zur Laufzeit, erfasst und gespeichert werden,
- **dass** das Protokollierungswerkzeug (30) zwischen Programmiergerät (26) und Automatisierungsgerät (14, 16, 18, 20) ausgetauschte Telegramme (32) zum Erfassen der Daten (28) überwacht und darin enthaltene Nutzdaten (34) je nach Art des jeweiligen Telegramms (32) übernimmt und
- **dass** das Protokollierungswerkzeug (30) als Mitschrift (36) der Übertragung eine Kombination der übertragenen Daten (28), so wie diese aufgrund der Telegramme (32) beim Automatisierungsgerät (14, 16, 18, 20) kombiniert werden oder kombinierbar sind, zur weiteren Auswertung bereitstellt.

**2.** Verfahren nach Anspruch 1, wobei die Mitschrift (36) mit dem Steuerungsprogramm (24) oder einem anderen Steuerungsprogramm verglichen wird.

**3.** Verfahren nach Anspruch 2, wobei der Vergleich mittels des Protokollierungswerkzeugs (30) durchgeführt wird.

**4.** Verfahren nach Anspruch 2 oder 3, wobei das Ergebnis des Vergleichs für eine Freigabe des Steuerungsprogramms (24) zur Steuerung und/oder Überwachung des technischen Prozesses (22) herangezogen wird.

**5.** Verfahren nach einem der vorangehenden Ansprüche, wobei das Überwachen der ausgetauschten Telegramme (32) durch das Protokollierungswerkzeug (30) durch Überwachen des Datentransfers auf Ebene einer der durch das OSI-Schichtenmodell definierten Schicht erfolgt.

**6.** Verfahren nach einem der vorangehenden Ansprüche, wobei nach der ursprünglichen Übertragung die dabei durch das Protokollierungswerkzeug (30) erzeugte Mitschrift (36) als Steuerungsprogramm (24) erneut an das jeweilige Automatisierungsgerät (14, 16, 18, 20) oder ein anderes Automatisierungsgerät (14, 16, 18, 20) übertragen wird.

**7.** Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

**8.** Computerprogrammprodukt, insbesondere Speichermedium, mit einem durch einen Computer ausführbaren Computerprogramm gemäß Anspruch 7.
